# EUROPÄISCHE PATENTANMELDUNG

(11) **EP 2 030 760 A2**
(43) Veröffentlichungstag der Anmeldung: **04.03.2009**
(21) Anmeldenummer: 08012479.5
(22) Anmeldetag: 10.07.2008
(51) Int. Cl.: B29C 65/08, B31B 17/00, B31B 43/00, B65D 75/06

(54) **Einrichtung zum Herstellen eines Rundbeutels**

(30) Priorität: 30.07.2007 DE 202007010662 U
(71) Anmelder: Laudenberg Verpackungsmaschinen GmbH, 51688 Wipperfürth (DE)
(72) Erfinder: Beinghaus, Jürgen, 51688 Wipperfürth (DE); Tommek, Peter, 51515 Kürten (DE); Schmitz, Albert, 51515 Kürten (DE)
(74) Vertreter: Tönhardt, Marion

(57) **Zusammenfassung**

Die Erfindung beschreibt eine Einrichtung zum Herstellen eines Rundbeutels, mit zwei Amboßhalbschalen (50, 80; 250, 280), die relativ zueinander aus einer Offenstellung in eine Schließstellung und zurück bewegbar sind, wobei die Amboßhalbschalen (50, 80; 250, 280) in ihrer Schließstellung einen Innenraum definieren, der zumindest dem Außenumfang des herzustellenden Rundbeutels entspricht; und mit einem Ultraschall-Siegelwerkzeug (10), das auf die Amboßhalbschalen (50, 80; 250, 280) zu oder von ihnen weg bewegbar ist.

## Beschreibung

Die vorliegende Erfindung betrifft eine Einrichtung zum Herstellen eines Rundbeutels, mit der der Deckel und/oder der Boden eines Rundbeutels mittels Ultraschall in eine Folienröhre verschweißt werden können.

"Rundbeutel" meint dabei, daß der Beutel zumindest in befülltem Zustand einen kreisförmigen, elliptischen oder auf andere Weise gerundeten Querschnitt hat, wobei die Form des Querschnitts durch Deckel bzw. Boden vorgegeben ist.

Es hat sich gezeigt, daß das Verschweißen mittels Ultraschall gegenüber dem thermischen Verschweißen Vorteile hat, da, selbst wenn pulverige Stoffe in den Rundbeutel eingefüllt werden, immer eine saubere Schweißnaht erzeugt werden kann, selbst wenn das Pulver in die Nähe der Schweißnaht kommt.

Es ist daher die Aufgabe der Erfindung, eine Einrichtung zum Herstellen eines Rundbeutels zur Verfügung zu stellen, mit der einfach und zuverlässig die Deckel- bzw. Bodensiegelung eines Rundbeutels mittels Ultraschall vorgenommen werden kann.

Diese Aufgabe wird von einer Einrichtung nach Anspruch 1 gelöst. Vorteilhafte Ausgestaltungen sind Gegenstand der Unteransprüche.

Erfindungsgemäß weist eine Einrichtung zum Herstellen eines Rundbeutels zwei Amboßhalbschalen auf, die relativ zueinander aus einer Offenstellung in eine Schließstellung und zurück bewegbar sind, wobei die Amboßhalbschalen in ihrer Schließstellung einen Innenraum definieren, der zumindest dem Außenumfang des herzustellenden Rundbeutels entspricht. Die Einrichtung weist weiter ein Ultraschall-Siegelwerkzeug auf, das auf die Amboßhalbschalen zu oder von ihnen weg bewegbar ist.

Vorteilhaft ist eine Zentriervorrichtung vorgesehen, welche die Amboßhalbschalen in der Schließstellung verschiebesicher hält. Dabei kann die Zentriervorrichtung mindestens einen Vorsprung und eine komplementäre Nut aufweisen, die an bzw. in den sich in Schließstellung der Amboßhalbschalen berührenden Wänden vorgesehen sind.

Für den Fertigungsablauf ist es vorteilhaft, wenn die Amboßhalbschalen relativ zueinander verschwenkbar sind, obwohl auch Ausführungsformen denkbar sind, bei denen sie in einer Ebene aufeinander zu verfahren werden.

Bei einer Ausgestaltung ist vorgesehen, daß eine der Amboßhalbschalen stationär und die andere nicht stationär ist. Dabei kann die nicht stationäre Amboßhalbschale mittels einer auf einer Drehachse, die sich im wesentlichen in der Grenzebene der Amboßhalbschalen in der Schließstellung befindet, gelagerten Schwenkvorrichtung verschwenkbar sein.

Vorteilhaft ist die nicht stationäre Amboßhalbschale von einer Zuhaltung beaufschlagbar, wobei ein Knebel vorgesehen sein kann, der die nicht stationäre Amboßhalbschale in der Schließstellung fixiert.

Bei einer alternativen Ausführungsform sind die Amboßhalbschalen um eine gemeinsame Achse verschwenkbar.

Bei dieser Ausführungsform ist bevorzugt, wenn die Amboßhalbschalen über eine Hebelkette verfahrbar sind, die in der Schließstellung ihre Totpunktstellung erreicht.

Dabei kann eine der Amboßhalbschalen von einer Exzenterverstellung angelenkt sein, die für eine symmetrische Lage der Amboßhalbschalen zu einer zu versiegelnden Folienröhre sorgt.

Im folgenden soll die Erfindung lediglich beispielhaft anhand der beigefügten Zeichnung erläutert werden. Dabei zeigt:
- Figur 1: eine erste Ausführungsform einer Einrichtung zum Herstellen eines Rundbeu- tels gemäß der vorliegenden Erfindung in der Offenstellung;
- Figur 2: die Einrichtung der Figur 1 in Schließstellung;
- Figur 3: eine zweite Ausführungsform einer Einrichtung zum Herstellen eines Rund- beutels gemäß der vorliegenden Erfindung in der Offenstellung; und
- Figur 4: die Einrichtung der Figur 3 in der Schließstellung.

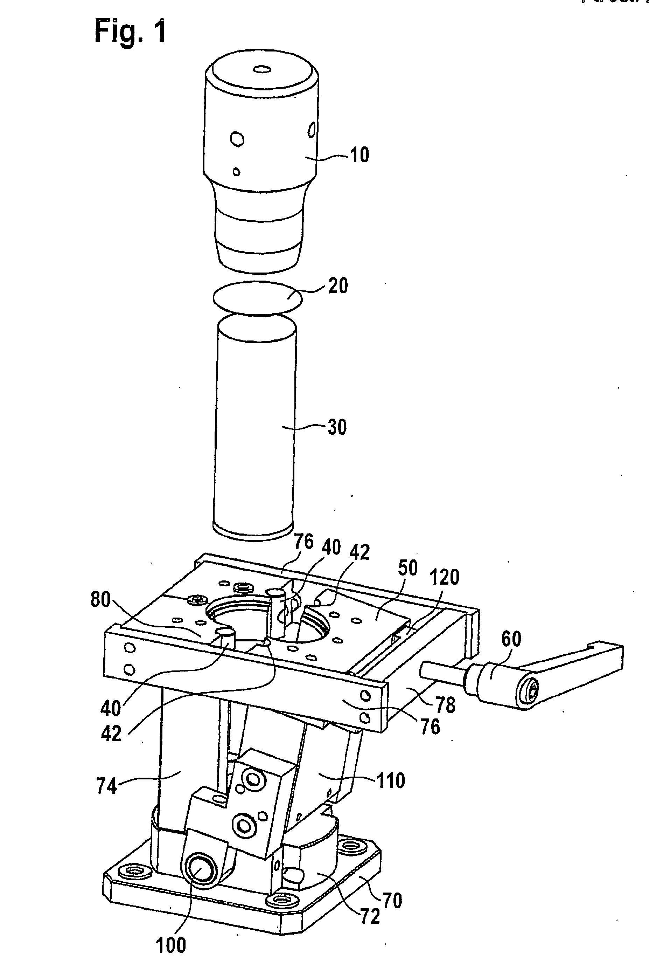

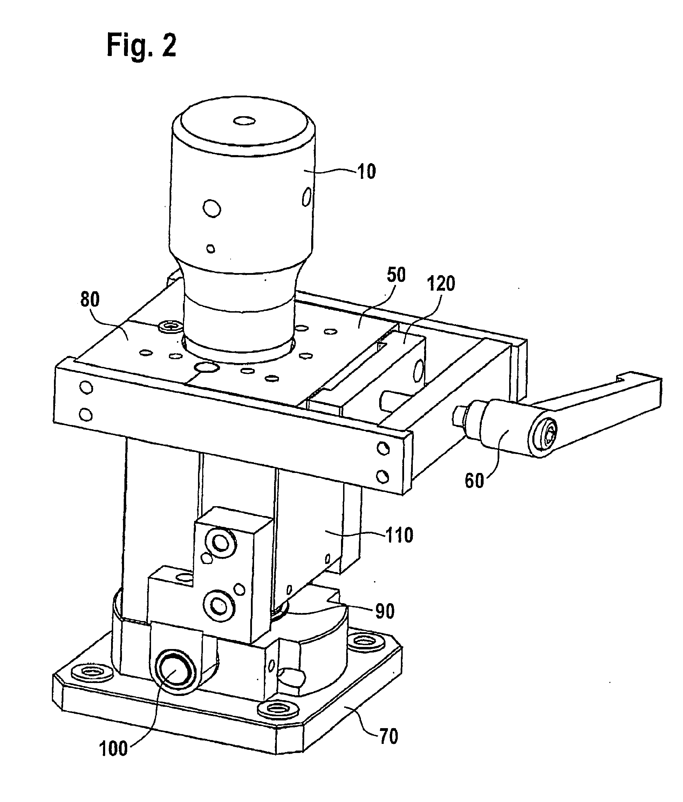

Bei der Ausführungsform, die in Figur 1 und Figur 2 dargestellt ist, ist auf einer Bodenplatte 70 ein Podest 72 angebracht, in welchem eine Schwenkeinrichtung 110 um eine Achse 100 drehbar gelagert ist, die eine Amboßhalbschale 50 trägt. Eine zweite Amboßhalbschale 80 ist stationär auf einem Träger 74 angeordnet. Die Amboßhalbschale 80 weist zwei gerundete Vorsprünge 40 auf, die in entsprechend gerundete Nuten 42 in der Amboßhalbschale 50 einliegen können, wenn die Einrichtung geschlossen wird. Die Vorsprünge 40 und die Nuten 42 bilden zusammen eine Zentriervorrichtung, die dafür sorgt, daß ein Verschieben der Amboßhalbschalen 50, 80 in der Schließstellung nicht erfolgen kann. Ein Rahmen aus zwei an der Amboßhalbschale 80 bzw. am Träger festgelegten Längsstreben 76 und einer sie verbindenden Querstrebe 78 bildet eine Halterung für eine Knebelschraube 60, welche auf eine an der Amboßhalbschale 50 angebrachte Zuhaltung 120 wirkt. Schematisch über den Amboßhalbschalen 50, 80 dargestellt ist ein Ultraschall-Werkzeug 10, mit dem ein Boden oder ein Deckel 20 auf eine Folienröhre 30 aufgesiegelt werden soll.

Dazu wird die Folienröhre 30 manuell zwischen die Amboßhalbschalen 50, 80 in ihrer Offenstellung, Figur 1, gebracht. Die genaue Höhenpositionierung ist dabei durch eine Höheneinstellung 90, in Figur 2 zu sehen, eindeutig vorgegeben. Jetzt wird die Einrichtung geschlossen, indem die nicht stationäre Amboßhalbschale 50 mittels der Schwenkeinrichtung 110 auf die Amboßhalbschale 80 zu verschwenkt wird und mittels der Zuhaltung 120 und der Knebelschraube 60 fixiert wird. Nun wird der Boden 70 in die geschlossenen Amboßhalbschalen 50, 80 eingelegt. In den Amboßhalbschalen 50, 80 sind spezielle Zentrierungen und Einführhilfen vorgesehen, die den Boden 70 beim Einsetzen in die Folienröhre vorformen. Anschließend wird das Ultraschall-Werkzeug 10 abgesenkt, so daß die Verschweißung des Bodens 70 mit der Folienröhre 30 zwischen den Amboßhalbschalen 50, 80 vorgenommen werden kann. Nach dem Versiegeln wird das Ultraschall-Werkzeug 10 angehoben, die Knebelschraube 60 wird gelöst, so daß die Amboßhalbschale 50 von der Amboßhalbschale 80 weg verschwenkt werden kann. Die Folienröhre 30 mit dem angeschweißten Boden 70 wird nun entnommen. Soll ein Deckel in den einseitig geschlossenen Rundbeutel eingesiegelt werden, wird der Rundbeutel um 180° gedreht und wieder zwischen die Amboßhalbschalen 50, 80 abgesenkt. Anschließend werden die Arbeitsgänge, die oben erläutert sind, wiederholt, bis schließlich auch der Deckel an die Folienröhre 30 angeschweißt ist.

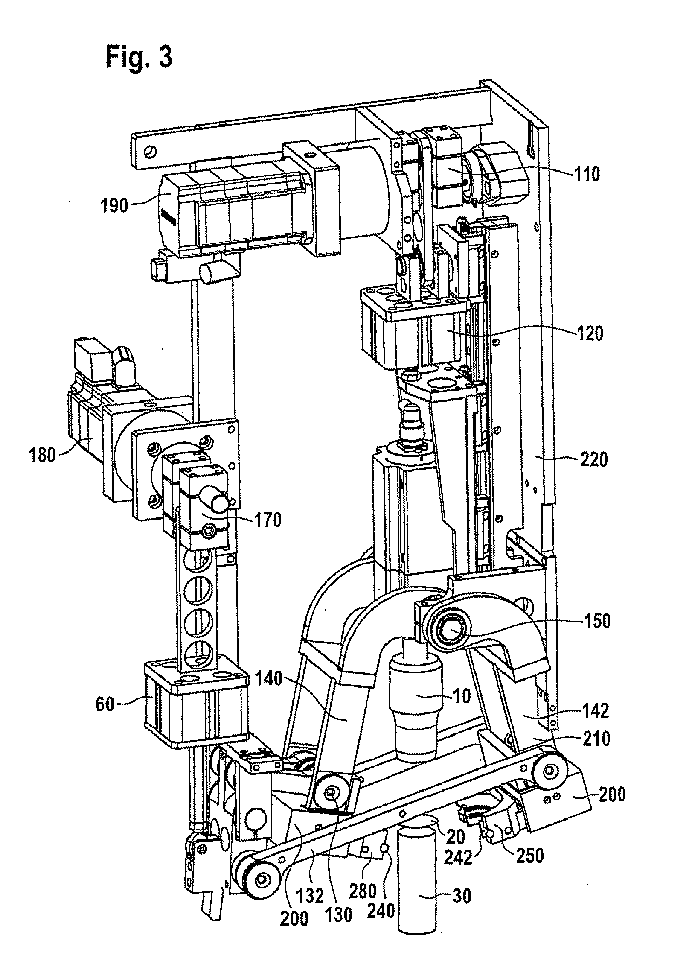

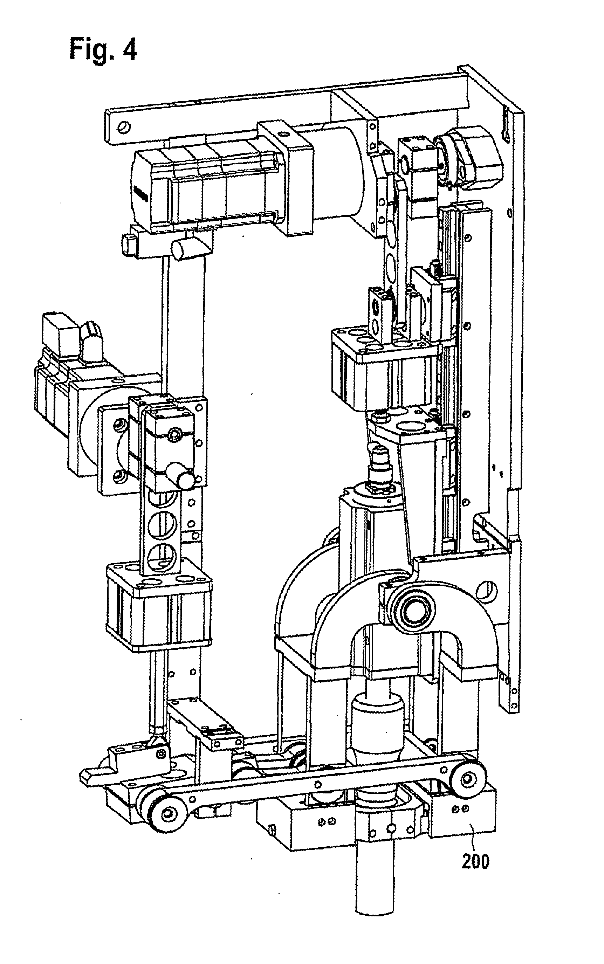

Die eben beschriebene Einrichtung kann zum Herstellen von leeren und gefüllten Rundbeuteln verwendet werden. Sie ist insbesondere für den manuellen Betrieb gedacht, obwohl die Schritte grundsätzlich automatisiert werden könnten. Für den automatisierten Betrieb hat sich jedoch eine zweite Ausführungsform einer Einrichtung zum Herstellen eines Rundbeutels als besonders vorteilhaft erwiesen, die im Zusammenhang mit den Figuren 3 und 4 beschrieben wird.

Zwei Amboßhalbschalen 250, 280 sitzen in Aufnahmen 200, in der ihre Position exakt eingestellt werden kann. Die Amboßhalbschalen 250, 280 können mittels einer Hebelkette 130, 132, 140, 142 um eine Achse 150 aus einer Offenstellung in eine Schließstellung und zurück verschwenkt werden. Das Verschwenken erfolgt über einen Servoantrieb 180, der einen Kurbeltrieb 170 betätigt. In den Kurbeltrieb 170 ist eine Luftfeder 160 integriert, um die Zuhaltekraft reproduzierbar einstellen zu können. Der Kurbeltrieb 170 lenkt das Hebelwerk 130, 132 an, das wiederum an den Aufnahmen 200 für die Amboßhalbschalen 250, 280 angelenkt ist. Teil des Hebelwerkes 130, 132 ist eine Exzenterverstellung 130, die an dem Kurbeltrieb 170 einerseits und an einem Siegelhebel 140 für die Amboßhalbschale 280 andererseits angelenkt ist, sorgt für eine symmetrische Lage der Amboßhalbschalen 250, 280 zu einer Folienröhre 30. Die Hebel 132 sind an dem Kurbeltrieb 170 und an einem Siegelhebel 142 für die Amboßhalbschale 250 angelenkt. Querliegende Vorsprünge 240 und Nuten 242 in den Wänden der Amboßhalbschalen 280, 250, die in Schließstellung der Einrichtung aneinanderliegen, bilden eine Zentriervorrichtung ähnlich der, wie sie im Zusammenhang mit der Ausführungsform der Figuren 1 und 2 beschrieben ist. Ein Ultraschall-Werkzeug 10 ist mittels eines Servoantriebes 180 und eines Kurbeltriebes 170 vertikal verfahrbar, so daß es sich in der Schließstellung der Amboßhalbschalen 250, 280 unmittelbar über diesen befindet. In den Kurbeltrieb 110 ist eine Luftfeder 120 integriert, um den Siegeldruck reproduzierbar einstellen zu können.

In der Schließstellung der Amboßhalbschalen 250, 280 hat die Hebelkette 130, 132, 140 142 ihre Totpunktstellung erreicht, daher läßt sich über den Kurbeltrieb 170 eine sehr hohe Zuhaltekraft erzeugen, ohne daß man eine große Antriebskraft aufbringen müßte.

Zum Versiegeln wird eine Folienröhre 30 mittels eines nicht dargestellten Transportsystems in die Siegelposition gebracht. Ein Deckel (20) oder Boden wird über eine ebenfalls nicht gezeigte Vereinzelung und Zuführeinrichtung in die Siegelposition zwischen Siegelwerkzeug und Amboßhalbschalen gebracht und in einer nicht dargestellten Brille fixiert. Anschließend wird das Ultraschall-Werkzeug 10 mittels des Servoantriebes vertikal verfahren. Hierbei wird der Deckel (20) oder Boden durch die Brille in die Amboßhalbschalen 250, 280 und damit in die Folienröhre 30 gedrückt. Anschließend wird verschweißt. Wie bei der ersten Ausführungsform einer Einrichtung zum Herstellen eines Rundbeutels sind in die Amboßhalbschalen 250, 280 spezielle Zentrierungen und Einführhilfen eingebracht, die den Deckel (20) oder Boden beim Einsetzen in die Folienröhre 30 vorformen.

Bei dieser Ausführungsform einer Einrichtung zum Herstellen eines Rundbeutels ist für das Einsiegeln des Deckels und des Bodens jeweils eine getrennte Einrichtung erforderlich, obwohl daran gedacht werden könnte, ein System vorzusehen, bei dem die Folienröhre 30 entnommen und um 180° gedreht wird.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

## Patentansprüche

1. Einrichtung zum Herstellen eines Rundbeutels, mit
zwei Amboßhalbschalen (50, 80; 250, 280), die relativ zueinander aus einer Offenstellung in eine Schließstellung und zurück bewegbar sind,
wobei die Amboßhalbschalen (50, 80; 250, 280) in ihrer Schließstellung einen Innenraum definieren, der zumindest dem Außenumfang des herzustellenden Rundbeutels entspricht; und
mit einem Ultraschall-Siegelwerkzeug (10), das auf die Amboßhalbschalen (50, 80; 250, 280) zu oder von ihnen weg bewegbar ist.

2. Einrichtung nach Anspruch 1, bei der eine Zentriervorrichtung (40, 42; 240, 242) vorgesehen ist, welche die Amboßhalbschalen (50, 80; 250, 280) in der Schließstellung verschiebesicher hält.

3. Einrichtung nach Anspruch 2, bei der die Zentriervorrichtung mindestens einen Vorsprung (40, 240) und eine komplementäre Nut (42, 242)aufweist, die an bzw. in den sich in Schließstellung der Amboßhalbschalen (50, 80; 250, 280) berührenden Wänden vorgesehen sind.

4. Einrichtung nach einem der Ansprüche 1 bis 3, bei der die Amboßhalbschalen (50, 80; 250, 280) relativ zueinander verschwenkbar sind.

5. Einrichtung nach einem der Ansprüche 1 bis 4, bei der eine (80) der Amboßhalbschalen stationär ist.

6. Einrichtung nach Anspruch 5, bei der eine nicht stationäre Amboßhalbschale (50) mittels einer auf einer Drehachse (100), die sich im wesentlichen in der Grenzebene der Amboßhalbschalen (50, 80) in der Schließstellung befindet, gelagerten Schwenkvorrichtung (110) verschwenkbar ist.

7. Einrichtung nach Anspruch 5 oder Anspruch 6, bei der die nicht stationäre Amboßhalbschale (50) von einer Zuhaltung (120) beaufschlagbar ist, wobei ein Knebel (60) vorgesehen ist, der die nicht stationäre Amboßhalbschale (50) in der Schließstellung fixiert.

8. Einrichtung nach einem der Ansprüche 1 bis 4, bei der die Amboßhalbschalen (250, 280) um eine gemeinsame Achse (150) verschwenkbar sind.

9. Einrichtung nach Anspruch 8, bei der die Amboßhalbschalen (250, 280) über eine Hebelkette (130, 132, 140, 142) verfahrbar sind, die in der Schließstellung ihre Totpunktstellung erreicht.

10. Einrichtung nach Anspruch 8, bei der eine (280) der Amboßhalbschalen von einer Exzenterverstellung (130) angelenkt ist, die für eine symmetrische Lage der Amboßhalbschalen (250, 280) zu einer zu versiegelnden Folienröhre (30) sorgt.
